# EUROPEAN PATENT APPLICATION

(11) **EP 3 073 704 A1**
(43) Date of publication of application: **28.09.2016**
(21) Application number: 15460009.2
(22) Date of filing: 23.03.2015
(51) Int. Cl.: H04L 29/06, H04W 12/02, H04W 12/04

(54) **METHOD OF DATA SECURING TRANSMITTED OVER BLUETOOTH AND TRANSMITTER DEVICE TRANSMITTING SECURED DATA OVER BLUETOOTH**

(71) Applicant: Comarch Technologies Spólka z Ograniczona Odpowiedzialnoscia, 31-864 Kraków (PL)
(72) Inventor: Golonka, Michal, 31-864 Kraków (PL); Jarzecki, Arkadiusz, 31-864 Kraków (PL); Sowa, Grzegorz, 31-864 Kraków (PL); Strug, Michal, 31-864 Kraków (PL)

(57) **Abstract**

According to the method of data securing transmitted over Bluetooth a transmitter device (1) broadcasts advertising frame (100) which contains a fixed UUID (101), a random minor number (102), a random major number (103), and a random MAC address (104) of the transmitter device. After receiving an advertising frame (100) computing device (2) sends scan request (200) to the transmitter device (1) to transmit another data. Transmitter device (1) encrypts data with key (310) and sends these data to the computing device (2) in the form of the scan response frame (300). Computing device (2) sends encrypted data (301) to a remote security server (3) which decrypts data with a key (501) and sends back decrypted data (401) to the computing device (3). Transmitter device (1) contains a CPU (11), a real time clock (12), a microprocessor (13) with encryption algorithm (302) and a noise generator (14).

## Description

The present invention relates to a method of data securing transmitted over Bluetooth. The invention relates also to transmitter device transmitting secured data over Bluetooth. The invention is particularly intended to be used in the field of the Internet of Things.

Today we are witnessing an intensive development of new fields of application of electronics and information technologies, so-called the Internet of Things. The Internet of Things solutions enable user communication and access to an information which was inaccessible for him before. For example providing store with appropriate transmitter device customer gains quick and easy access over mobile phone to an information about the product range, discounts or about specific products. Thanks to the Internet of Things solutions user can communicate with the objects or the objects can communicate between themselves in the way they did not have so far. Effective and practical use of idea of the Internet of Things involves collecting and transferring data between vast number of devices. The Internet of Things devices must be mobile as much as possible, to be useful everywhere, very often in the places where there is no any opportunity to plug in power like on the store shelves. Accordingly they must be relatively small and have independent power supply. Moreover the Internet of Things devices very often must provide access to the huge amount of data. Access to data using the Internet of Things devices is provided by connection with databases where such information are located. For example, a mobile phone user who received output from a transmitter device assigned to a ware connects to a server and downloads information about this ware.

There is many wireless communications systems to transmit data known in prior art. Many of them, however have no practical application for the Internet of Things devices due to energy intensity or other properties such as a signal strength. Due to low energy consumption most of the manufacturers of the Internet of Things devices to communicate with other devices and users employ Bluetooth Low Energy. This technology allows for a significant reduction in energy consumption of the Internet of Things devices. Simple data transmission over Bluetooth cause however, that broadcasted signal or data are available for everybody equipped with a receiver. When it comes to the Internet of Things devices, which are intended to provide specified information to specified entity, unlimited access to transmitted data is unwished-for. Thus, various ways of protecting data transmitted by the Internet of Things devices have been proposed.

The US patent application US 2014135042 discloses method of securing broadcasted signals against unauthorized access to transmitted data. According to the method disclosed in description signals sent by device can be encrypted, so that the application on the mobile phone is able to authenticate the transmitter device and define whether the transmitted signal is from genuine source. As an example of the possible use case of an unsecured signal sent by the beacon submits the situation when mobile phone with iOS or Android receives signal from the transmitter device (beacon) and afterwards sends transmitted data to the another mobile phone equipped with, the same operating system. According to this use case the second mobile phone accepts data, afterwards transmits said data pretending to be the initial transmitter device (beacon). In order to avoid such frauds two methods of securing transmitted data have been proposed.

According to the first method the transmitter device (beacon) is combined with a mobile phone without pairing, and only exchanges encryption keys. The problem with this is that connection can take place some seconds. The connection can be established faster, using 100 ms intervals to signals broadcasting by device. Unfortunately, this approach results in higher energy consumption.

The second method is to periodic UUID change. Each beacon gets unique ID. Each transmitter, device (beacon) has timer that starts counting time once the battery is inserted. Based on timer the device changes UUID in a predetermined manner. When the signal from beacon is received application on the mobile phone reads the unique ID or get UUID from beacon. The mobile phone receives also measured time of transmitter device. Afterwards the mobile phone thanks to application connect with the server which records unique ID and measured time. Then the server assigns a private key to the beacon, and then the application programs beacon with the unique private key. Afterwards beacon hashes together reported time, private key and unique ID. This creates an ID that is constantly changing based on the time. The server knows correct UUID and key and can authenticate beacon. According to the invention is possible to send partly decrypted ID. This allow the server to faster decrypt ID.

From the US patent application US 2014220883 it is known method of transmitting secured identifier or code. In some embodiments, in order to prevent fraud, rotational change of the code has been applied by the use of hash and nonce. A nonce is periodically generated by the transmitter. For example, you can use the current timestamp of a microprocessor or a Bluetooth clock to generate a unique value. In another embodiment, a monotonically increasing sequence, periodically updated, is used to generate a nonce. For example increment may be every ten minutes. Then nonce is combined with other data and identifier, afterwards this elements are hashed to create key. The secret key is stored in the memory. Said key is appended at the end of the combination to generate a secure identifier for broadcasting. In some embodiments signal broadcast is preceded by the configuration of the BLTE module to update the parameters. Broadcasted UUID number is constant e.g.128 bit. This number allows the passive scanning under mobile phone operating system. The secure identifier broadcast by the transmitter may be captured by the mobile phone through an audio channel by actively scanning Bluetooth advertisement or by passive scanning by the operating system.

When the mobile phone receives the secure identifier, said identifier is authenticated. For example, the secure identifier may be sent to an associated server for authentication. In alternate embodiment such processing may be performed in the mobile phone. For example, if server is unavailable for any reason the secure identifier may be cached and relayed to the server when it becomes reachable. In the off-line mode authentication, each nonce may be valid for predetermined period of time e.g. one hour. In order to authenticate the secure identifier remote server receives request from the mobile phone. Then hash data are computed and the result is compared with the hash bytes included with the secure identifier. For example an irreversible hash may be computed on the (nonce and identifier) combination with the key e.g. HMAC. The result is compared with the hash bytes on the secure identifier. Afterwards it is determined if the secure identifier is valid. If the secure identifier is valid, a valid response is sent to the client. If the secure identifier in not valid, the request is discarded and logged as a fraudulent attempt, and a valid response is not sent to the client.

The purpose of the present invention is to provide a solution which will effectively reduce the risk of unauthorized use of data transmitted by the Internet of Things devices. This purpose has been achieved by implementation of technical features set forth below.

The present invention relates to a method of data securing transmitted over Bluetooth wherein a transmitter device broadcasts advertising frame which contains at least a UUID number, a minor number, a major number and a MAC address of the transmitter device, said advertising frame is received by a computing device. The invention is characterized in that the transmitting device generates advertising frame with a fixed UUID number, a random minor number, a random major number and a random MAC address of the transmitter device. Afterwards the computing device, which received advertising frame, sends scan request to the transmitter device to transmit another data. Transmitter device encrypts data with a key by a microprocessor with an encryption algorithm and, after receive scan request, sends to the computing device said encrypted data in the form of the scan response frame. Afterwards the computing device sends to the remote security server said encrypted data. Said server decrypts with a key encrypted data and sends back decrypted data to the computing device.

Preferably the encrypted data are created by the transmitter device separately from receiving scan request. The encrypted data may be created by the transmitter device every time after receiving scan request. The computing device may receive, from the remote security server, at least one key and store said key in the memory. Afterwards the computing device, after receiving next scan response frame with encrypted data, employs the key to decrypt said data. Preferably the access to the key sent from the remote security server to the computing device is protected by password. The remote security server creates key from mother a key and a time data. The encryption algorithm creates encrypted data from a transmitting device data, a random number and a key. Said key is created from a mother key and time data. Preferably the random number is created by a noise generator in the fixed intervals. The transmitter device data can include at least temperature data, an acceleration sensor data, a battery voltage and a fixed ID number of the transmitter device. Preferably the transmitter device data include at least temperature data, a battery voltage and a variable ID number of the transmitter device, wherein said variable ID number of the transmitter device is created at predetermined intervals by an algorithm on the basis of a base value unique for each transmitter device. Security server transmits to the computing device an ID number coincident with the variable ID number of the transmitter device, afterwards the computing device correlate these two ID number to identify the transmitter device. The transmitter device data and time data are collected by a CPU, and afterwards are forwarded to a microprocessor. The encrypted data are created by the microprocessor which performs encryption algorithm, then said encrypted data are sent to the CPU. Preferably the random minor number, the random major number and the random MAC address of the transmitter device are created by the CPU based on random numbers created by the microprocessor with usage of the connected noise generator. The random minor number, the random major number and the random MAC address of the transmitter device may be created in the fixed intervals. Preferably at each five random numbers, three are assigned to MAC address of the transmitting device, one to minor number and one to major number. The random minor number, the random major number and the random MAC address of the transmitting device are created separately from the random number used to create encrypted data.

The invention relates also to transmitter device transmitting secured data over Bluetooth comprises a power supply, an antenna, a memory and the CPU with Bluetooth module and the real time clock. The transmitter device is equipped with the microprocessor with the encryption algorithm and the noise generator, wherein said microprocessor is connected with the CPU via a data bus. The real time clock is a software solution.

The real time clock may be an hardware solution. Preferably transmitter device includes a temperature sensor and an accelerometer.

The advantage of the invention is a solution that in an effective way prevents to take advantages by unauthorized entities from data broadcasted by the transmitter device. The use of constantly changing values of a minor, a major and a MAC address broadcasted in the advertising frame blocks or at least significantly impedes from constant exploit by the unauthorized person transmitter device to transmit their own data, e.g. commercials. Even if someone gets to know values of the minor, major and MAC address sent in the advertising frame and use them to make the transmitter device to transmit his own data, change of these values e.g. an hour later, makes that solution based on old values made by unauthorized entity does not work with the transmitter device with new values. In order to provide complementary protection against using the transmitter device by unauthorized entities to transmit their own content the invention implements also data encryption. Permanent changes of data broadcasted in the advertising frame in combination with encryption prevents from unauthorized use of the transmitter device.

The invention is presented on appended drawings where:
Fig. 1 is a flowchart of the method of data securing transmitted over Bluetooth when a computing device always works on-line.
Fig. 2 is a flowchart of the method of data securing transmitted over Bluetooth when a computing device at intervals works off-line.
Fig. 3 is a block diagram of the advertising frame.
Fig. 4 is a block diagram of the data encryption sent in scan response frame.
Fig. 5 is a block diagram of the transmitter device data with fixed ID number of the transmitter device.
Fig. 6 is a block diagram of the transmitter device data with variable ID number of the transmitter device.
Fig. 7 is a block diagram of the key created by security server.
Fig. 8 is a block diagram of the transmitter device.

Detailed description of the invention is shown in the example below.

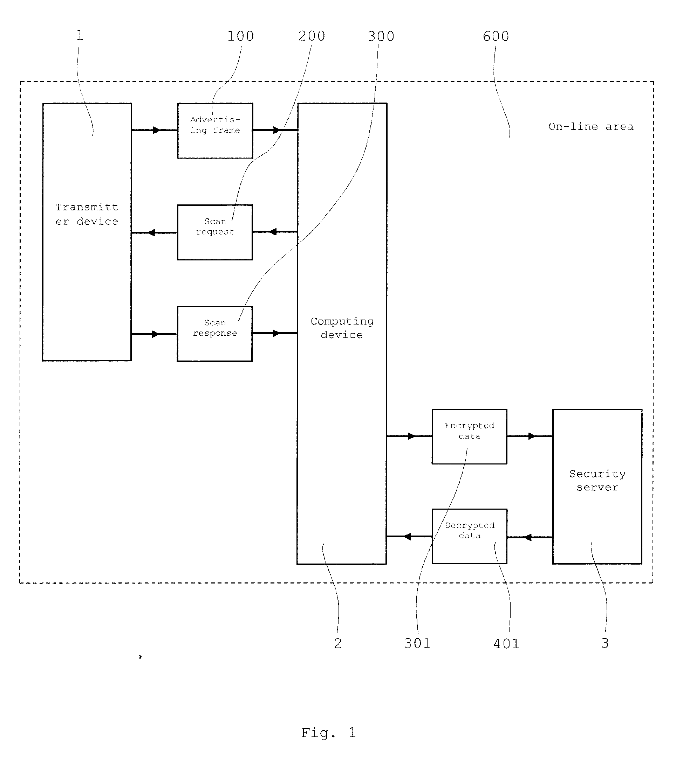

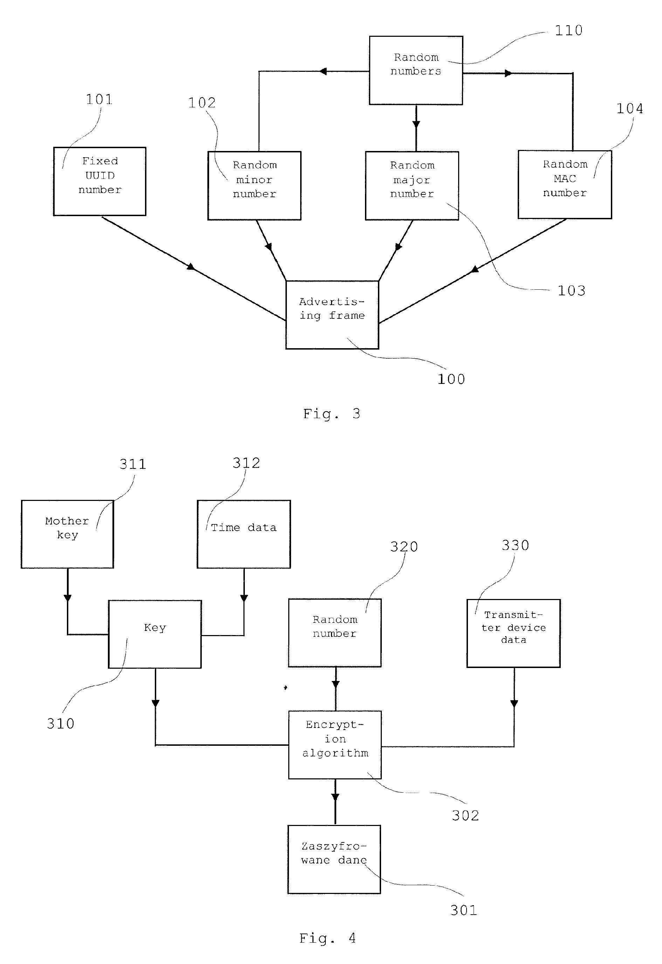

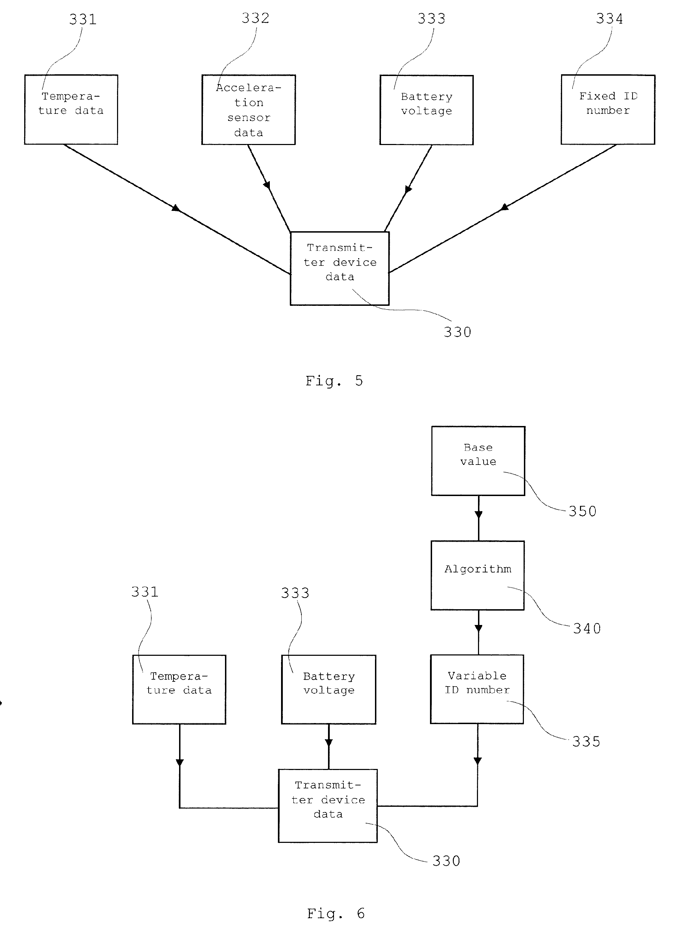

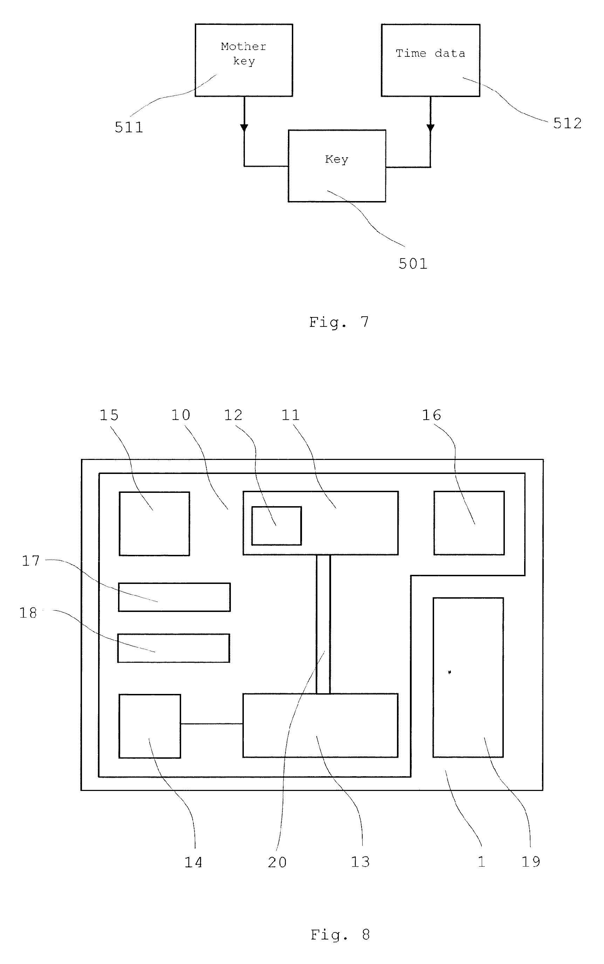

A first embodiment of the invention - the method of data securing transmitted over Bluetooth, shown in Fig. 1 refers to a situation where a computing device 2 is connected to the Internet network all time during authentication process of a transmitter device 1. According to the invention the transmitter device 1 broadcasts signal in the fixed intervals. In the embodiment transmitter device 1 is beacon. The transmitter device 1 broadcasts at predetermined intervals - 600 ms, signals over Bluetooth, that can be received by the Bluetooth enabled devices. Frequency of broadcasting can be different than 600 ms. In the embodiment the transmitter device 1 is equipped with a Bluetooth Low Energy, thus it does not consume a lot of power, so that a device can be battery supplied. According to the invention, signal broadcast by the transmitter device 1 is received by the computing device 2. In the preferred embodiment, the computing device 2 is a mobile computing device e.g. smartphone or tablet. Signal broadcast over Bluetooth by the transmitter device 1 is advertising frame 100, which consists of a UUID, a minor number, a major number a MAC address of transmitter device and other data. Thanks to data from the advertising frame 100 the computing device 2, which received broadcasted signal is able to determine and assign the location of the transmitting device 1 in the space. If the minor and major numbers are fixed, everyone who got to know these numbers may use the transmitter device 1 at known position to broadcast, thanks to this device, own content. Of course in most cases is undesirable if the unauthorized entities take advantage of other's property without permission for own purposes. The advertising frame 100 shown in Fig. 3, according to the invention comprises a fixed UUID 101, a random minor number 102, a random major number 103 and a random MAC address 104 of the transmitter device. The random values of the minor, major, MAC address change in the fixed intervals e.g. one hour. Thanks to this solution unauthorized entities lose the possibility of using the transmitter device 1 for broadcasting own content. For example, if the unauthorized entity receives advertising frame 100, broadcasted by transmitter device 1, and got to know the UUID, minor, major number and MAC address appointed at 12 p.m. then this entity will want to use these values at 1 p.m. to transmit own data, these known and used values will not be correct for the transmitter device 1, and device will be invisible to this person and his solution. Of course, the random values of minor, major, MAC address can change in the different intervals than one hour. The advertising frame 100, broadcasted by the transmitter device 1, is created by a CPU 11 thanks to an application installed on it. Application installed on the CPU 11 changes the minor, major values and the MAC address based on a random number 110. The random numbers 110 are created by the a microprocessor 13 on the basis of the noises coming from a noise generator 14. The random number 110 created by the microprocessor 13 are transmitted via a data bus 20 to the CPU 11. In the embodiment at each five random numbers 110, three are assigned to MAC address of the transmitting device, one to minor number and one to major number. CPU 11 requests from the microprocessor 13 random minor number 102, random major number 103 and random MAC address 104 of the transmitter device 1 in the intervals, which may be fixed or variable. Time is counted every second by a real time clock 12 since the start of the transmitter device 1. Afterwards this created advertising frame 100 is broadcasted by the transmitter device 1. The computing device 2, which has received the advertising frame 100 is fitted with an application interacting with an application installed on CPU 11. To apply the transmitter device 1 as the Internet of Thing device e.g. to provide location data or to supply the user of the computing device 2 information related to the place where the beacon is fitted, the exchange of more data is needed. Moreover, in order to prevent access to this information to the unauthorized entities, a secure data transfer is necessary. For this purpose computing device 2 sends to the transmitter device 1 scan request 200 for additional information. Scan request 200 includes the random MAC address of the transmitter device 1 and a MAC address of the computing device 2. The transmitter device 1, after receiving the scan request 200, sends to the computing device 2 scan response frame 300 which includes encrypted data 301. Encryption prevents from unauthorized usage. In the embodiment encrypted data 301 are created by transmitter device 1 separately from scan request 200. This means that they can be created prior to the scan request 200. Of course, in another embodiment they can be created after transmitter device 1 receives scan request 200. The block diagram of data encryption shows Fig. 4. According to the invention encrypted data 301 are created by the microprocessor 13 which performs encryption algorithm 302. In the embodiment the encryption algorithm 302 uses an AES algorithm. The encryption algorithm 302 creates encrypted data 301 from transmitter device data 330, a random number 320 and a key 310. The transmitter device data 330 include temperature data 331, acceleration sensor data 332, battery voltage 333 and fixed ID number 334 of transmitter device. Said fixed ID number 334 of the transmitter device is four bytes size. In Fig.5 is shown the block diagram of transmitter device data 330 with according to the present embodiment. In other embodiment transmitter device data 330 include temperature data 331, battery voltage 333 and variable ID number of the transmitter device. Said variable ID number 335 of the transmitter device is created at predetermined intervals by an algorithm 340 on the basis of a base value 350 unique for each transmitter device 1. The variable ID number 335 of the transmitter device can be created in different intervals, e.g. once a week. Because ID number is changed at predetermined intervals it is much more difficult to unauthorized entity create valid list of transmitter devices 1. Even if said unauthorized entity gets to know ID numbers and on the basis of these data, he will use transmitter devices 1 to transmit his content, change of the ID number of the transmitter will make that unauthorized entity solution will not be compatible with transmitter devices with new ID numbers. Because of in the present embodiment transmitter device data 330 does not include the acceleration sensor data 332, the variable ID number 335 of the transmitter device can be expanded to six bytes. In Fig.6 is shown the block diagram of transmitter device data 330 with according to the above mentioned embodiment. In the case where computing device 2, during a whole authentication process of the transmitter device 1, is always on-line, the transmitter device data 330 can contain fixed or variable ID number of the transmitter device. It depends on the settings of the transmitter device firmware. According to the invention transmitter device data 330 are collected by the CPU 11, afterwards said data are forwarded via data bus 20 to the microprocessor 13. The random number 320 is created using noise generator 14. In the present embodiment random value 320 has sixteen bits. The random number 320 as well as random numbers 110 used to create random minor, major and MAC address may be created at fixed intervals. Moreover, the random number 320 is created separately from the random numbers 110 used to create the random minor, major and MAC address. The key 310 used to encryption, is created based on a mother key 311 and time data 312. The mother key 311 is installed in the microprocessor 11. Time data 312 are delivered form a real time clock 12. The transmitter device data 330, and the time data 312 are collected by CPU 11, and forwarded to the microprocessor 13. The microprocessor 13 encrypts data with the key 310 using the encryption algorithm 302. In the embodiment key 310 is a time key k(Tx). Afterwards the encrypted data 301 are sent over Bluetooth to the computing device 2, as a scan response frame 300. In the described embodiment computing device 2 functions in an on-line area 600. Therefore, the computing device 2 sends, over the Internet network, received encrypted data 301 to the remote security server 3. The remote security server 3 decrypts encrypted data 301 thanks to a key 501, which is symmetric to the key 310. Block diagram of the key 501 shows Fig. 7. The key 501 is created from a mother key 511 and time data 512. The mother key 511 is identical to the mother key 311. The time data 512 is the same as the data time 312. Afterwards, the remote security server 3 sends, over the Internet network, decrypted data 401 to the computing device 2. In this manner, the transmitter device 1 authentication occurs. With authentication the computing device 2 gains user access to a content associated with data transmitted by the transmitter device 1.

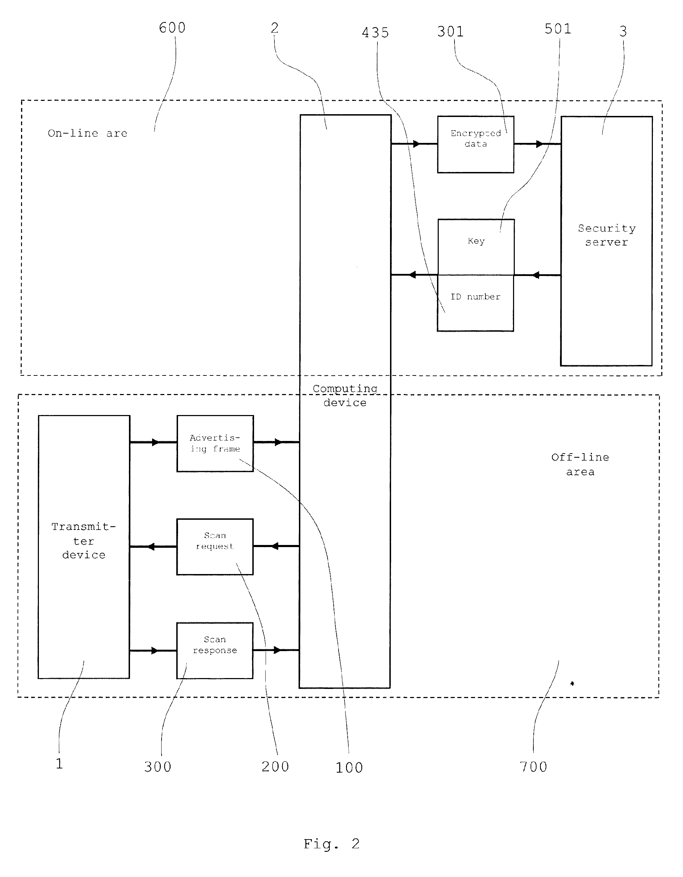

A second embodiment of the invention, shown in Fig. 2, refers to a situation where the computing device 2, in the authentication process of transmitter device 1, is connected to the Internet network only during data transfer between said computing device 2 and the remote security server 3. In this embodiment, the computing device 2 in the initial stage of the authentication process of the transmitter device 1 is in on-line are 600. Before the authentication of the transmitter device 1 according to this embodiment it is necessary to conduct the authentication described in the first embodiment, or at least steps till receive the encrypted data 301 by the remote security server 1. In the present embodiment, transmitter device data 330, included in the encrypted data 301, consist of the temperature data 331, the battery voltage 333 and a variable ID number 335 of the transmitter device. The computing device 2 sends to the security server 3, thanks to the Internet network, encrypted data 301. Then, security server 3, knowing the key 310 included in the encrypted data 301, creates the key 501. The key 501, as in the first embodiment is created from the mother key 511 and the time data 512. Assessment of the time data 312 included in key 302 allows server to create at least one key 501 where time data 512 will be compatible with the time data 312, which will be applied to create encrypted data 302 subsequently. When the time data 312 are generated every hour and the security server 3 knows the exact time used to create key 310, e.g 00:15 a.m. said server, based on this time, is able to create the keys 501, which can be used to decrypt data encrypted with the keys 310 generated at 01.15 a.m., 02.15 a.m., 03.15 a.m., etc. The frequency of keys 501 creation must be the same as the frequency of key 310 creation. Next, security server 3 sends, over the Internet network, key 501 to the computing device 2. The computing device 2 caches the received key 501 in the memory. In order to identify transmitter device 1, security server 2 sends to the computing device 2 ID number 435 coincident with variable ID number 335 of the transmitter device which was employed to decrypt data sent in scan response frame 300. ID number 435 is sent with the key 501. Afterwards, when the computing device 2 receives the scan response frame 300 with encrypted data 301, said device uses the cached key 501 to decrypt data and correlates ID number 435 received from the security server 3 with variable ID number 335 of the computing device to identify the transmitter device 1. This step of authentication the transmitter device 1 may take place when the computer device 2 functions in an off-line area 700. In the present embodiment, to ensure greater security key 501, sent from the remote security server 3 to the computing device 2, is password protect.

A block diagram of the transmitter device transmitting secured data over Bluetooth is shown in Fig. 8. The transmitter device 1 comprises a printed circuit board 10 with the CPU 11. The CPU 11 has the application which works with the application installed on the computing device 2. The CPU 11 contains also Bluetooth stack. The transmitter device 1 is equipped with the real time clock 12, which counts time from powering of on device. In the embodiment, the real time clock 12 is a software solution on the CPU 11. The transmitter device 1 is also equipped with the microprocessor 13, which performs encryption algorithm 302. Communication between the CPU 11 and the microprocessor is provided by data bus 20. The noise generator 14 is connected with microprocessor. Furthermore, the transmitter device 1 contains a memory 15 which stores e.g. collected data. In the embodiment, memory 15 is an EEPROM memory. The transmitter device 1 is equipped with an antenna 16, which enables wireless data transmission and reception. In the present embodiment the transmitter device 1 comprises also a temperature sensor 17 and accelerometer 18, which may be employed to collect information used in data encryption. The transmitter device 1 is equipped with an independent power supply 19 which in this embodiment is the battery.

The invention being physical may be widely used in many areas of life, such as retail, logistic, navigation. For example, the transmitter device placed in a store enables the user of mobile computing device with the dedicated application easy access to details about wares, discounts etc. Transmitter devices deployed on airports, station or other buildings like these enable travelers better orientation. The transmitter devices inserted into freighted packages facilitates easier and quicker identification throughout a supply chain. These are just some examples of where the invention can be applied. In order to ensure the above mentioned examples of application of the invention it is necessary to provide dedicated platform (data center) that would provide information related to the transmitter device - its location. Both in the first and in the second embodiment dedicated platform is an intermediate stage in the transmission of the decrypted data 401 or the key 501 between the security server 3 and the computing device 2. The security server 3 sends decrypted data 401 or key 501 to the server where the dedicated platform is, then said server forwards to the computing device 2 decrypted data 401 or key 501 including data related to the transmitter device 1 which sent encrypted data 301.

## Claims

1. Method of data securing transmitted over Bluetooth wherein a transmitter device broadcasts advertising frame (100) which contains at least a UUID number, a minor number, a major number and a MAC address of a transmitter device, said advertising frame (100) is received by a computing device (2), **characterized in that** the transmitting device (1) generates an advertising frame (100) with a fixed UUID number (101), a random minor number (102), a random major number (103) and a random MAC address (104) of the transmitter device, afterwards the computing device (2), which received advertising frame (100), sends scan request (200) to the transmitter device (1) to transmit another data, wherein the transmitter device (1) encrypts data with a key (310) by firmware with an encryption algorithm (302) and, after receive scan request (200), sends to the computing device (2) said encrypted data (301) in the form of a scan response frame (300), afterwards the computing device (2) sends to the remote security server (3) the encrypted data (301), then said security server (3) decrypts with a key (501) said encrypted data (301) and sends back decrypted data (401) to the computing device (3).

2. Method according to claim 1, wherein the encrypted data (301) are created by the transmitter device (1) separately from receiving scan request (200).

3. Method according to claim 1, wherein the encrypted data (301) are created by the transmitter device (1) every time after receiving scan request (200).

4. Method according to claim 1, wherein the computing device (2), receives from the remote security server (3) at least one key (501) and store said key in memory, afterwards the computing device (2), after receiving next scan response frame (300) with the encrypted data (301), employs the key (501) to decrypt said data.

5. Method according to claim 4, wherein the access to the key (501) sent from remote security server (3) to the computing device (2) is password protect.

6. Method according to claim 1, wherein the remote security server (3) creates key (501) from a mother key (511) and time data (512).

7. Method according to claim 1, wherein the encryption algorithm (302) creates encrypted data (301) from a transmitting device data (330), a random number (320) and a key (310), wherein key (310) is created from a mother key (311) and time data (312).

8. Method according to claim 7, wherein the random number (320) is created by a noise generator (14) in the fixed intervals.

9. Method according to claim 7, wherein the transmitter device data (330) include at least temperature data (331), acceleration sensor data (332), a battery voltage (333) and a fixed ID number (334) of the transmitter device.

10. Method according to claim 7, wherein the transmitter device data (330) include at least temperature data (331), a battery voltage (333) and a variable ID number (335) of the transmitter device, wherein said variable ID number (335) of the transmitter device is created at predetermined intervals by an algorithm (340) on the basis of a base value (350) unique for each transmitter device (1).

11. Method according to claim 7, wherein security server (3) transmits to the computing device (2) an ID number (435) coincident with the variable ID number (335) of the transmitter device, afterwards the computing device (2) correlate these two ID number to identify the transmitter device (1).

12. Method according to claim 7, wherein the transmitter device data (330) and the time data (312) are collected by a CPU (11) then said data are forwarded to a microprocessor (13).

13. Method according to claims 1 or 12, wherein the encrypted data (301) are created by the microprocessor (13) which performs encryption algorithm (302) then said encrypted data are sent to the CPU (11).

14. Method according to claim 1, wherein the random minor number (102), the random major number (103) and the random MAC address (104) of the transmitter device are created by the CPU (11) based on the random numbers (110) created by the microprocessor (13) with usage of the noise generator (14), wherein the random minor number (102), the random major number (103) and the random MAC address (104) of the transmitter device are created in the fixed intervals.

15. Method according to claim 1, wherein at each five random numbers (110), three are assigned to MAC address of the transmitting device, one to minor number and one to major number.

16. Method according to claim 1, wherein the random minor number (102), the random major number (103) and the random MAC address (104) of the transmitting device are created separately from the random number (320) used to create encrypted data (301).

17. Transmitter device transmitting secured data over Bluetooth comprises a power supply, an antenna, a memory and the CPU with a Bluetooth module and the real time clock, **characterized in that** the transmitter device (1) is equipped with the microprocessor (13) with the encryption algorithm (302) and the noise generator (14), wherein said microprocessor (13) is connected with the CPU (11) via a data bus (20), and the real time clock (12) is a software solution.

18. Transmitter device according to claim 17, wherein the real time clock (12) is a hardware solution

19. Transmitter device according to claim 17, includes a temperature sensor (17) and an accelerometer (18).
